# EUROPÄISCHE PATENTSCHRIFT

(11) **EP 0 898 871 B1**
(45) Veröffentlichungstag und Bekanntmachung des Hinweises auf die Patenterteilung: **22.01.2003**
(21) Anmeldenummer: 98116038.5
(22) Anmeldetag: 25.08.1998
(51) Int. Cl.: A01D 34/71, E01H 1/08

(54) **Sammelbehälter in Sattelaufbau am Heck eines Trägerfahrzeugs**
Collecting container attached to the back of a carrier vehicle
Réservoir collecteur attelé à l'arrière d'un véhicule porteur

(30) Priorität: 26.08.1997 DE 29715312 U
(43) Veröffentlichungstag der Anmeldung: 03.03.1999
(73) Patentinhaber: Wiedenmann GmbH, 89192 Rammingen (DE)
(72) Erfinder:
(74) Vertreter: Flügel, Otto, Dipl.-Ing.

(56) Entgegenhaltungen:
- EP-A- 0 632 954
- FR-A- 2 530 920
- FR-A- 2 571 587
- FR-A- 2 672 464
- FR-A- 2 696 897
- FR-A- 2 732 546
- US-A- 4 104 852
- US-A- 4 426 830
- US-A- 4 614 080
- US-A- 4 996 829
- PATENT ABSTRACTS OF JAPAN vol. 014, no. 356 (C-0745), 2. August 1990 & JP 02 131522 A (ISEKI & CO LTD), 21. Mai 1990

## Beschreibung

Die Erfindung betrifft einen Sammelbehälter in Sattelaufbau am Heck eines Trägerfahrzeuges.

Solche an einem Trägerfahrzeug heckseitig zu befestigende Sammelbehälter sind grundsätzlich bekannt - EP 0 632 954 -. Dabei wurde noch keine Lösung gefunden, die den Anbau des Sammelbehälters besonders eng dem Trägerfahrzeug zugeordnet erlaubt. Eine solche enge Zuordnung ist aber erwünscht, damit das Trägerfahrzeug mit aufgesatteltem Sammelbehälter insgesamt möglichst kurz und damit wendig ist.

Der Erfindung liegt demnach die Aufgabe zugrunde, den Sammelbehälter in möglichst enger Zuordnung zu dem Trägerfahrzeug an diesem festlegen zu können.

Ausgehend von einem Sammelbehälter in Sattelaufbau am Heck eines Trägerfahrzeuges, der in dem dem Trägerfahrzeug zugewandten unteren Wandbereich ausgehend von der Seite, auf der ein Gebläse angeordnet ist, bis über die vertikale Längsmittelebene des Fahrzeugs hinausreichend, zu dieser unsymmetrisch in Richtung auf das Behälterinnere zurückversetzt ausgebildet ist und dass in dem Raum zwischen diesem zurückversetzten Wandbereich und dem Trägerfahrzeug eine getriebliche Übertragungseinrichtung angeordnet ist, die ein von dem Fahrzeugmotor ausgehend angetriebenes und etwa im Fahrzeuglängsmittelbereich gelegenes Antriebsglied mit der Gebläselaufradachse verbindet, wird dies erfindungsgemäß dadurch erreicht, dass ein an der Gebläserotorachse des Gebläses in vertikaler Ebene umlaufendes Riemenrad über einen um 90° verschränkt geführten Riemen mit einem in horizontaler Ebene umlaufenden Riemenrad als Abtriebsglied geführt ist, das seinerseits über einen weiteren Riementrieb direkt oder indirekt über die Eingangswelle eines Hydraulikgetriebes mit einem auf der vertikal gerichteten Abtriebswelle eines Antriebsmotoraggregates des Trägerfahrzeugs angeordneten Riemenrad verbunden ist.

Der Anschluss zwischen dem Abtriebsglied des Fahrzeugmotors und der Rotorwelle des Gebläses ist demnach als Riementrieb ausgebildet. Dabei ist das Abtriebsglied als Doppelriemenscheibe ausgebildet und dreht in horizontaler Ebene, also um eine senkrecht stehende Achse. An der Rotorwelle des Gebläses ist eine weitere Riemenscheibe angeordnet, die in vertikaler Ebene dreht, also um die horizontal in Fahrtrichtung verlaufende Gebläserotorwelle. Der diese beiden Getrieberäder verbindenden, den Raum vor der zurückversetzten Wandung des Sammelbehälters durchgreifenden Riemen verläuft demnach um 90° verschränkt. Die andere Spur der Doppelriemenscheibe des Abtriebsgliedes nimmt einen Treibriemen auf, der direkt oder indirekt über eine Getrieberiemenscheibe mit einem auf der Abtriebswelle des Motorantriebsaggregates des Fahrzeugs angeordneten Riemenrad im Getriebeeingriff steht.

Trägerfahrzeuge der hier in Rede stehenden Art, insbesondere Kleintraktoren, sind dabei mit einem hydrodynamischen Antrieb, also einem Ölverdrängungsantrieb ausgestattet, dessen Pumpleistung gesteuert wird. Die Pumpe wird von einem regelmäßig als Verbrennungsmotor ausgestalteten Antriebsmotoraggregat angetrieben, der über einen Keilriementrieb mit dem Getriebe verbunden ist. Die in günstiger Gewichtsverteilung - Antriebsmotoraggregat auf bzw. in Nähe der Vorderachse, Pumpe mit hydrodynamischem Antriebsaggregat auf oder in Nähe der Hinterachse des Fahrzeugsangeordneten Aggregate arbeiten mit vertikal verlaufender Abtriebs- und Eingangswelle, so dass eine Kraftübertragung durch Keilriementrieb in flacher Bauweise möglich wird, der direkt oder indirekt bis zum Abtriebsglied in Form einer Doppelriemenscheibe geführt ist und von dort mit dem weiteren Riementrieb auf die Rotorwelle arbeitet. Auf diese Weise ist eine raumaufwendige Gelenkwellenverbindung vermieden.

Mit diesem Aufbau ist es möglich, das Gebläse und insbesondere dessen Antriebseinrichtung zwischen dem Abtriebsglied des Fahrzeugs und der Gebläserotorwelle unterhalb der oberen frontseitigen Behälterwandung anzuordnen, und zwar derart, dass lediglich der für das seitlich der vertikalen Längsmittelebene des Fahrzeugs angeordnete Gebläse und dessen Antrieb zum Innenraum des Sammelbehälters hin zu verlegen, während der darüber befindliche und der zur anderen Seite hin gelegene Raum den Behälterinnenraum erhalten bleibt. Damit erreicht man bei enger Zuordnung zum Fahrzeug gleichwohl einen verhältnismäßig großen Innenraum des Sammelbehälters und damit eine entsprechende Aufnahmekapazität.

In besonders bevorzugter Ausführung ist das Gebläse an einer Festlegeeinrichtung gehalten, mit der der Sammelbehälter an das Chassis des Trägerfahrzeugs angeschlossen ist. Die Festlegeeinrichtung umfasst vorzugsweise einen Rahmen, der den fahrzeugseitigen, als Halbschale ausgebildeten Behälterteil trägt, an dem das als Falle ausgebildete andere, schalenförmige Behälterteil im oberen Endbereich um eine horizontale und zur Fahrzeuglängsrichtung senkrecht verlaufende Achse verschwenkbar gelagert ist. Der Rahmen übergreift dabei vorzugsweise den vor dem zurückversetzten Wandbereich des Sammelbehälters liegenden Raum und strebt von der Unterkante des Sammelbehälters bis zur Schwenkachse im Gebiet des zurückversetzten Wandbereiches geradlinig auf und verläuft dann im oberen Wandbereich des Sammelbehälters diesem folgend.

Vom Fahrzeugrahmen aus gesehen geht der Rahmen unmittelbar in eine Haltegabel aus zwei parallel verlaufenden, auf einen breiten Mittelbereich des Fahrzeugs beschränkt angeordnete Rahmenrohren über. Die Rahmenrohre sind in ihrem unteren Bereich an einer Quertraverse gehalten, an der seitlich versetzt das Gebläse befestigt ist und die im oberen Bereich die Schwenkachse stützen, insbesondere über eine die beiden Rahmenrohrenden verbindende Quertraverse.

Der Sammelbehälter bzw. dessen beiden Behälterteile sind aus Kunststoff gefertigt. Die Frontwandung im oberen Bereich des Sammelbehälters kann mit rillenförmigen Einbuchtungen versehen sein, in die die in diesem Bereich in Anpassung an die Behälterform bogenförmigen Rahmenrohre eingreifen.

Der rückwärtige Behälterteil, die Falle, kann zu Entleerung des Behälters grundsätzlich über einen entsprechenden Hebelarm handbetätigt um die Schwenkachse gedreht werden, vorzugsweise gegen die Kraft einer Rückholfeder, die in einem der Rahmenrohre untergebracht sein kann. Es ist aber auch eine fernbetätigte Verschwenkung der Falle dadurch möglich, dass im unteren Bereich ein Hubzylinder vorgesehen ist, der über ein eines der Rohrrahmen durchgreifendes Gelenkgestänge mit der Falle in Nähe der Schwenkachse verbunden ist. Dabei kann der hydraulische Hubzylinder an einer Wippe dergestalt angreifen, dass zunächst der im Unterkantenbereich der beiden Behälterteile vorgesehene Verschluss geöffnet und dann die Falle in die Öffnungsstellung verschwenkt wird.

Zur Sicherstellung der erforderlichen Riemenspannung können in bekannter Weise Spannrollen unter Federvorspannung, hier im Riemenverlauf zwischen Motor bzw. Getriebe und Abtriebsglied eine Rollenwippe vorgesehen sein. Auch das Abtriebsglied kann hinsichtlich der Spannung des Treibriemens zur Riemenscheibe des Gebläserotors entsprechend federbelastet ausgebildet sein. Diese letztere Vorspannung kann für den An- und Abbau des Sammelbehälters mit Gebläse mit Hilfe eines Handhebels aufgehoben werden.

Bevorzugt ist in den Getriebezug vom Abtriebsglied bis zur Gebläserotorwelle eine Kupplung eingeschaltet, vorzugsweise fernbetätigter Art, beispielsweise eine Magnetkupplung, die reibschlüssig arbeitet und die bevorzugt im Bereich der Riemenscheibe auf der Gebläserotorwelle angeordnet ist aber beispielsweise auch im Bereich des Abtriebsgliedes vorgesehen werden kann und mit deren Hilfe der Gebläseantrieb an- und abschaltbar ist.

Vorzugsweise im oberen rückseitigen Wandungsbereich des als Falle ausgebildeten schwenkbaren Behälterteils kann eine als Sieb ausgebildete Fläche vorgesehen sein, die den mit Sammelgut zu befüllenden Behälterinnenraum begrenzt. Nach außen hin münden die Sieböffnungen in einen nach unten hin geöffneten Kanal, der von einer mit entsprechendem äußeren Abstand von der Siebfläche geführten Fallengehäusewandung umgriffen bzw. gebildet ist. Damit wird eine gute Geräuschdämmung erzielt und anfallender Staub wird nach unten abgeleitet, so dass Wind diesen Staub weniger gut erfassen kann.

Zur möglichst platzsparenden Zuordnung des Sammelbehälters zu dem Trägerfahrzeug ist demnach die fahrzeugseitige Schale des Sammelbehälters im Bereich des Gebläses und dessen Antriebs nach innen ausgewölbt, der Sauger seitlich an dem für die Halterung dieser Schale vorgesehenen Rahmen angeordnet und vorzugsweise zur Vermeidung einer Gelenkwelle ein Riemengetriebe vorgesehen. So dass neben der engen Zuordnung auch von der Festigkeit her Vorteile entstehen. Der Sammelbehälter ist vorzugsweise über einen Schnellverschluss, d.h. untere Einhängeösen eingreifend in Achsbolzen des Fahrzeugs und darüber eine Steckachsverbindung, an das Fahrzeug an bzw. von diesem abbaubar.

In den beiliegenden Zeichnungen sind Ausführungsformen der Erfindung wiedergegeben. Auf die in den Zeichnungen wiedergegebenen Ausbildungen wird ausdrücklich Bezug genommen.

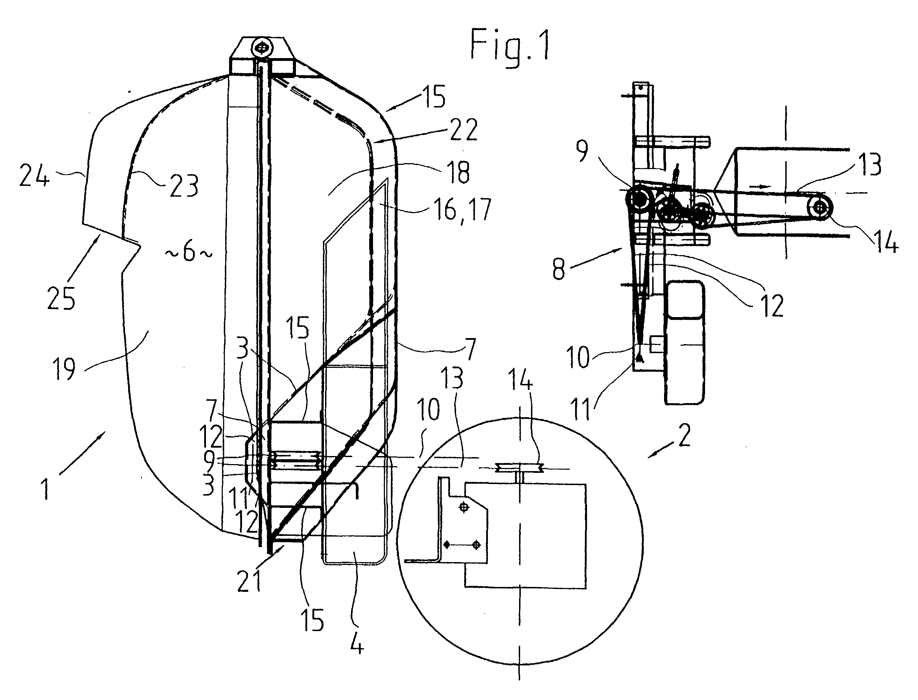

Figur 1 zeigt eine schematisierte Seitenansicht des an das nur heckseitig dargestellte Trägerfahrzeug 2 angebauten Sammelbehälters 1 dessen in Fahrtrichtung nach vorn weisender, schalenförmiger Behälterteil 18, dem ein über eine in dessen Oberkantenbereich etwa horizontal und senkrecht zur Fahrtrichtung verlaufende Schwenkachse 20 drehbarer Behälterteil / Falle unter Einschluss eines Behälterinnenraumes 6 zugeordnet ist an einer rahmenförmigen Festlegeeinrichtung 15 gehalten ist, die in ihrem unteren Bereich bei aufgesatteltem Behälter starr an dem Chassis des Trägerfahrzeugs 2 festgelegt ist. Der frontseitige Behälterteil ist mit einem zum Innenraum 6 des Sammelbehälters 1 hin eingezogenen unteren Wandbereich 3 versehen, der sich von der gebläseseitigen Außenseite des Behälters bis über dessen vertikale Längsmittelebene 5 hinweg erstreckt.

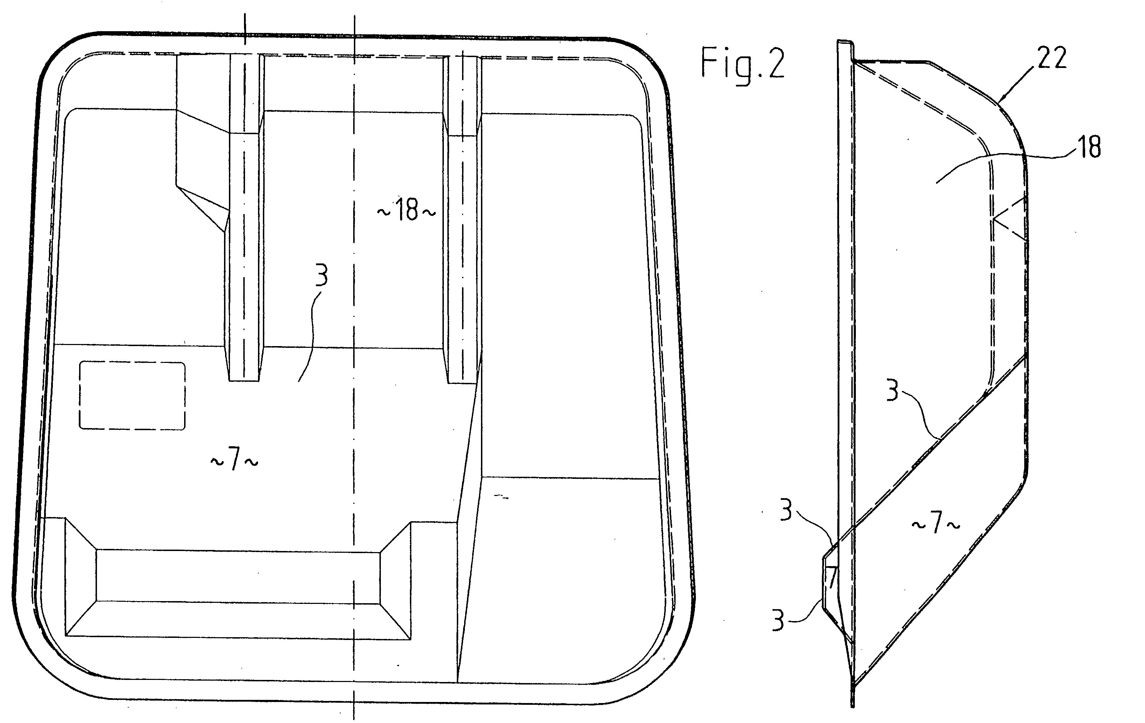

In Figur 2 ist eine vom Fahrzeug aus gesehene Frontansicht der an der rahmenförmigen Festlegeeinrichtung gehaltenen Behälterschale sowie deren Seitenansicht wiedergegeben. Der zum Behälterinnenraum hin eingezogene Wandbereich 3 gibt einen Raum 7 vor diesem Wandbereich frei, der der Aufnahme des Gebläses und dessen Antriebseinrichtung freilässt. Die Frontansicht lässt die unsymmetrische Ausbildung dieses Wandbereiches 3 bzw. Raumes 7 erkennen, die Seitenansicht zeigt die Ausformung des Wandbereiches 3 derart, dass der Boden dieser Behälterschale für ein gutes Entleeren schräg verläuft und sich bis in den Innenbereich des von der geschlossenen Falle umgriffenen Raumes erstreckt um Platz für den Riementrieb des Gebläses zu schaffen.

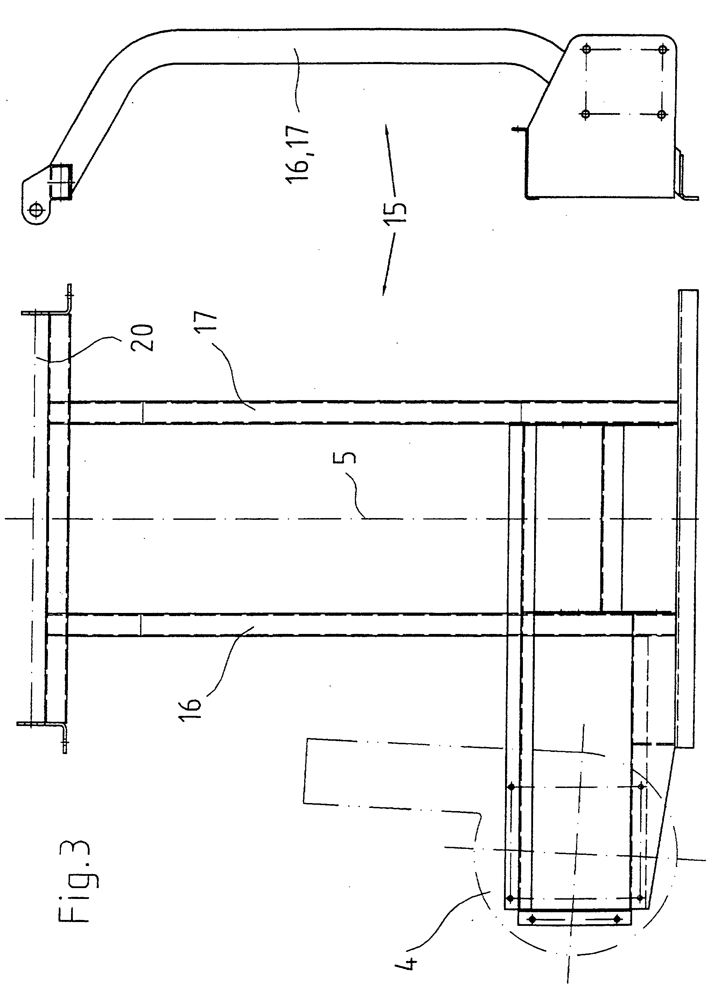

Figur 3 zeigt in eben einer solchen vom Fahrzeug aus gesehenen Frontansicht und in Seitenansicht die Festlegeeinrichtung in Gestalt eines Rahmens 15, der im unteren Bereich nach Art einer Quertraverse ausgebildet ist, die sich in den Bereich des Gebläses erstreckt und dort für den festen Anbau des Gebläses ausgebildet ist, während zwei parallele, als Rahmenrohre ausgebildete Rahmenteile sich von dieser Quertraverse zunächst geradlinig durch den Raum 7 und dann dem oberen Frontwandungsbereich der ortsfest gehaltenen Behälterschale 18 bogenförmig folgend bis zu der Schwenkachse 20 erstrecken und dort für diese eine Halterung bilden. Diese oberen Enden sind miteinander stabilisierend verbunden. Die beiden Rahmenrohre 16 und 17 sind symmetrisch zur vertikalen Längsmittelebene 5 angeordnet und zwar auf einen breiteren Rahmenmittelbereich beschränkt. Dabei verläuft das dem Gebläse abgewandte Rahmenrohr im vom Gebläse abgewandten Grenzbereich des Raumes 7. An dem so gebildeten Rahmen sind Anschlussbleche für die Festlegung an das Chassis des Fahrzeugs 2 nach vorn abstrebend vorgesehen.

In Figur 1 ist das Riemengetriebe angedeutet, über das die Gebläserotorwelle von einem nicht dargestellten Riemenrad auf der senkrecht stehenden Abtriebswelle eines Antriebsmotors angetrieben wird. In nicht dargestellter Weise ist zwischen einem Motor und einem Pumpen-Hydraulikantrieb ein in horizontaler Ebene umlaufender Riementrieb vorgesehen, der auf die Eingangswelle des Antriebes arbeitet, der oberhalb der Hinterachse angeordnet ist und eine in horizontaler Ebene drehende Riemenscheibe 14 aufweist. Diese ist mit einem in horizontaler Ebene verlaufenden Riemen an eine Doppelriemenscheibe als Abtriebsglied 9 angeschlossen, dessen andere Scheibe über einen Riemen 12 mit einem Riemenrad 11 auf der Gebläserotorachse 10 getrieblich verbunden ist. Aufgrund der vertikalen Achslage der Doppelriemenscheibe des Abtriebsglieds 9 und der horizontalen Lage der Gebläserotorwelle 10 verläuft dieser Riemen 12 verschränkt, d.h. zwischen zwei senkrecht zueinander stehenden Ebenen, wie dies Figur 1 in der Seitenansicht und in einer Antriebs-Prinzipskizze rechts oben erkennen lässt.

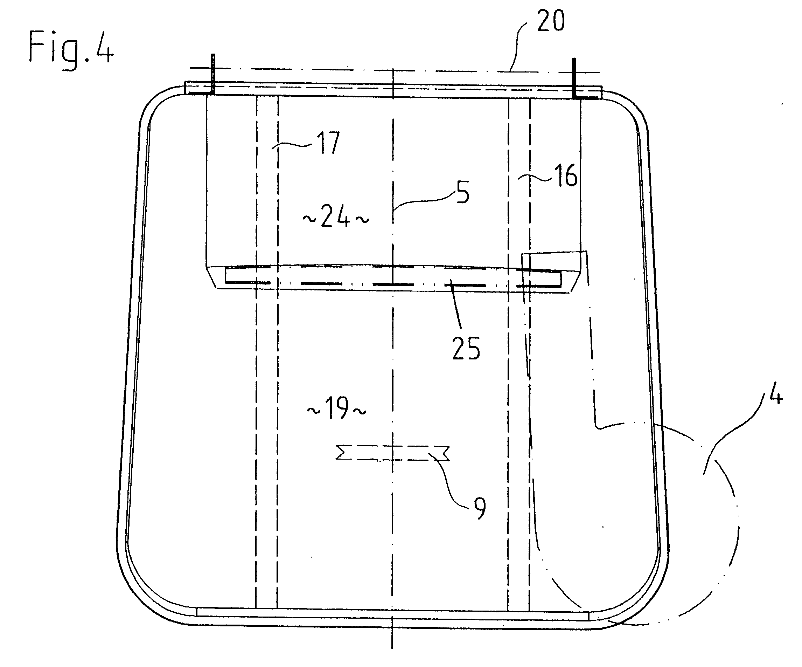

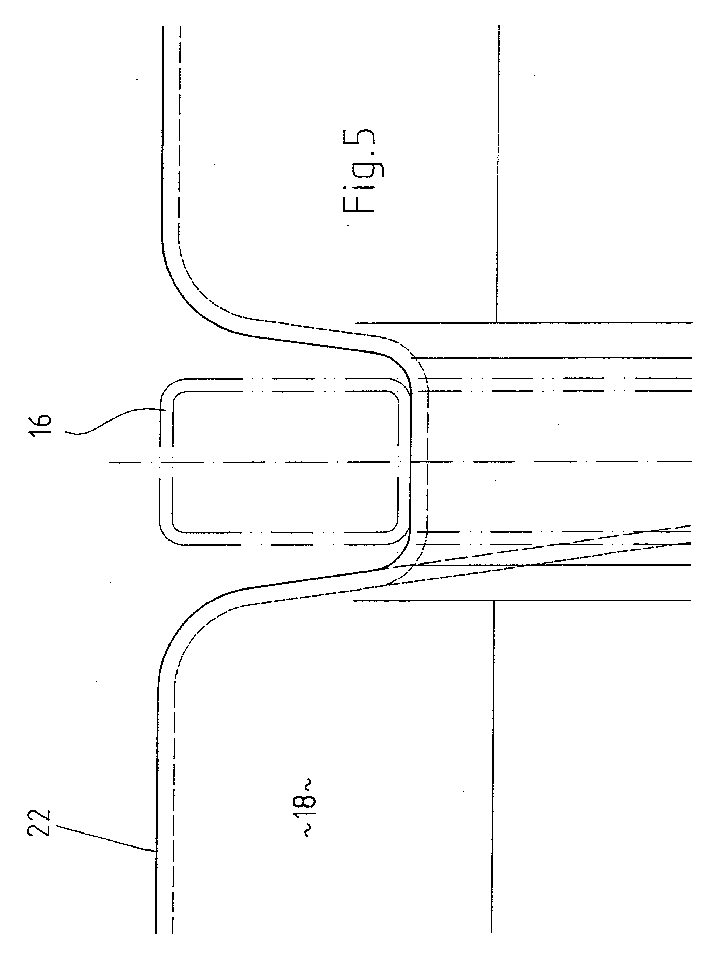

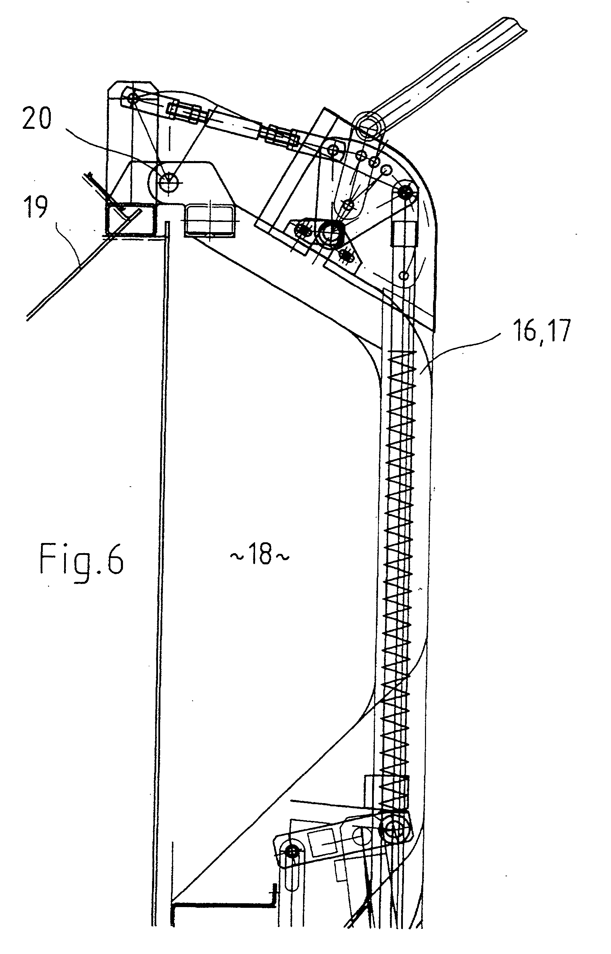

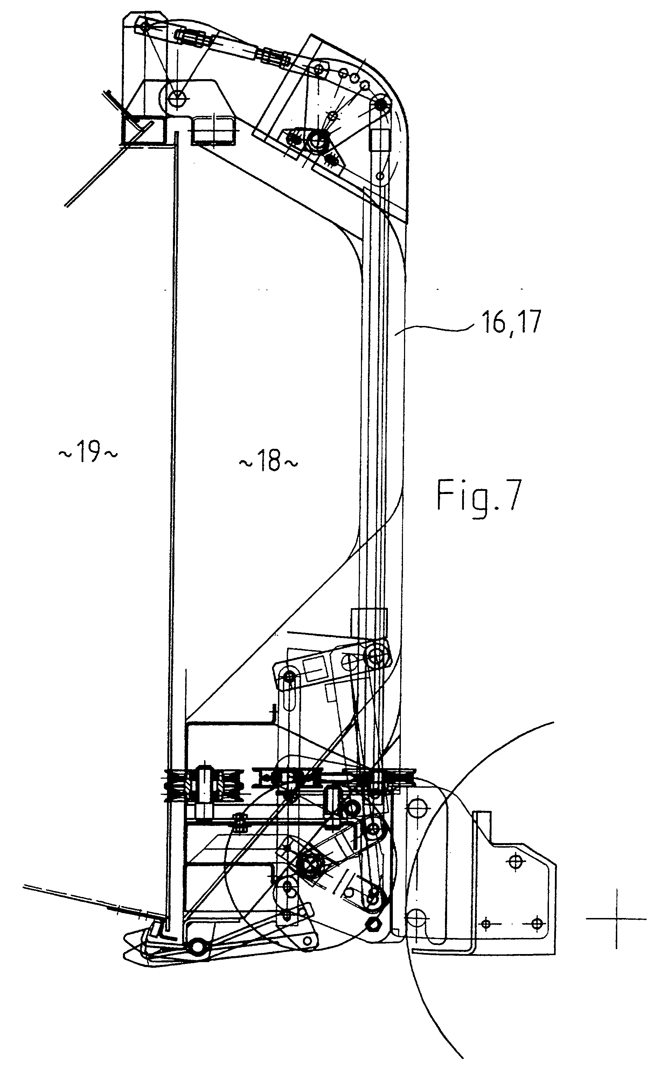

Aus der in Figur 4 wiedergegebenen Rückansicht des Sammelbehälters erkennt man die Anordnung des Gebläses und stilisiert des Abtriebsgliedes 9 sowie den Verlauf der Rahmenrohre 16 und 17 des Rahmens 15, die Schwenkachse 20 sowie eine Kanalausbildung 24, 25, auf die später zurückgekommen wird. Figur 5 zeigt einen Ausschnitt eine horizontalen Schnittansicht im Bereich eines Rahmenrohres 16 im oberen Behälterbereich, welches Rahmenrohr in eine in der oberen Frontwandung der am Rahmen befestigten Behälterschale ausgeformten rinnenförmigen Vertiefung. Die Figuren 6 und 7 zeigen Seitenansichten insbesondere der Frontschale des Sammelbehälters 1 einmal - Figur 6 - mit einer Einrichtung zum handbetätigten Verschwenken der Falle 19 mit einer Entlastungsfeder, die in einem der Rahmenrohre untergebracht ist und mit einer hydraulischen Fallenöffnung - Figur 7 -, die anstelle des Handhebels einen hydraulischen Hubzylinder aufweist, der im unteren Bereich des Rahmens 15 innerhalb des Raumes 7 angeordnet ist und über eine Folgesteuereinrichtung bei Betätigen der Klappe in die Öffnungsrichtung zunächst den zwischen der festen fordern Behälterschale 18 und der Falle 19 vorgesehenen Verschluss öffnet und dann die Falle in die Entleerungsstellung anhebt.

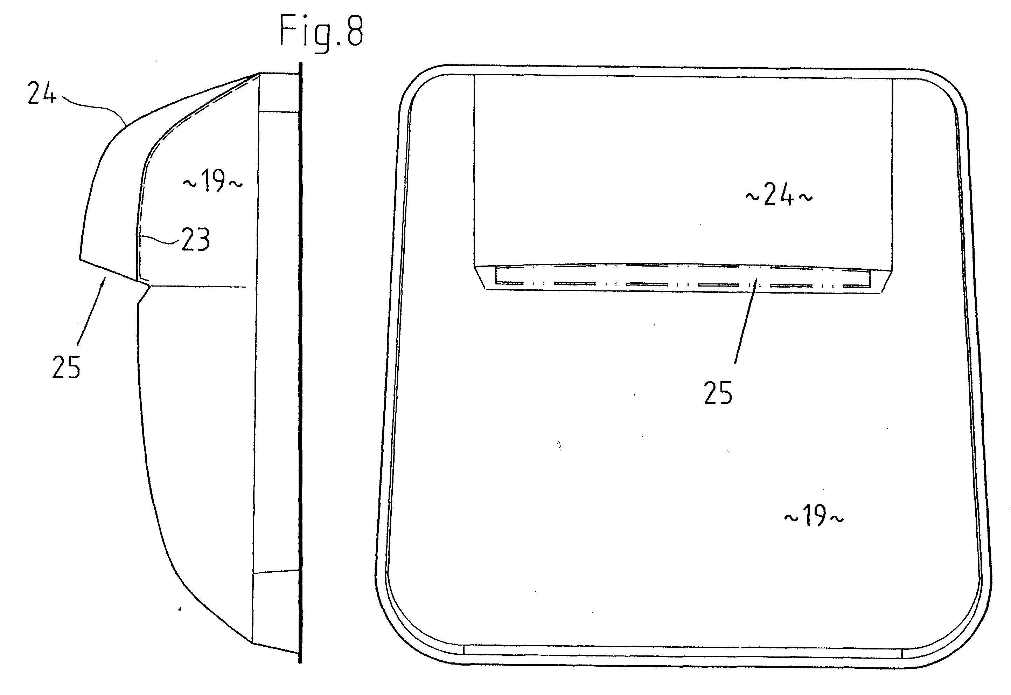

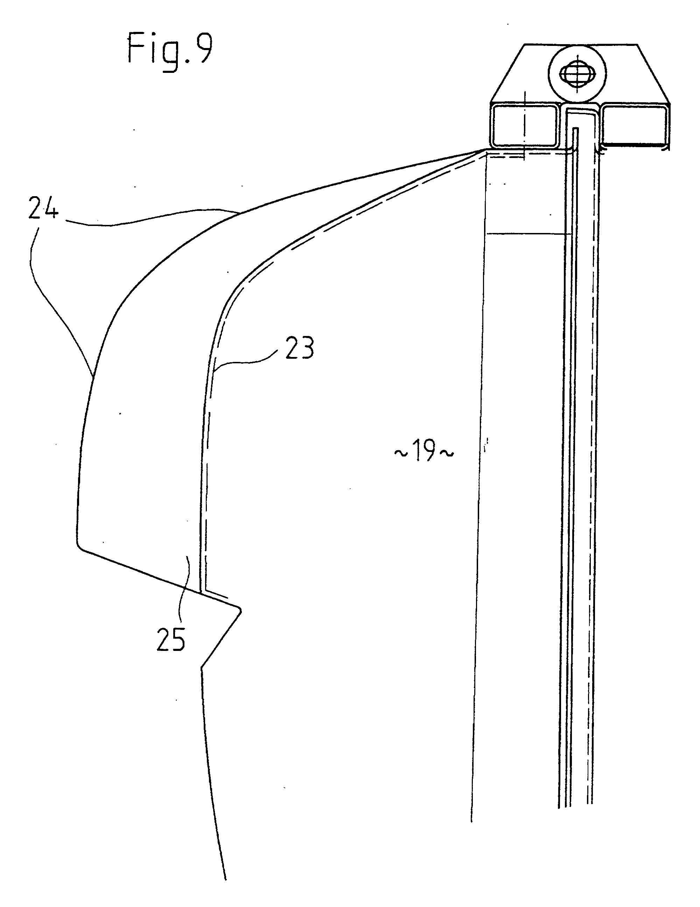

Aus den Figuren 8 und 9 gehen verschiedene Ausführungen der Falle hervor, in deren oberen rückwärtigen Wandbereich ein Sieb 23 - hier durch ein Lochblech gebildet - hervorgehen. Figur 8 zeigt in Seitenansicht und in teilweiser Rückansicht eine Falle, die in ihrem obere rückwärtige Wandungsbereich ein Lochblech aufweist, das den Behälterinnenraum 6 begrenzt und nach außen hin eine entsprechend gelochte Wandung eines Kanals 25 bildet, der im übrigen von einem Behälterwandteilbereich 24 mit Abstand von dem Lochblech umgriffen ist, welcher Behälterwandteilbereich 24 einstückig mit der übrigen Fallenwandung ausgebildet ist und in Abwärtsrichtung eine Öffnung berandet, durch die der Kanal 25 nach unten hin ins Freie tritt. Auf diese Weise wird bei Füllen des Behälters aus diesem austretende Luft - bedingt durch die Gebläseluft, die - Figur 2 - im Bereich der eingezogenen Behälterwand 3 durch eine Öffnung in den Sammelbehälter eintritt und durch Verdrängung - in dem Kanal 25 geleitet und geräuscharm und hinsichtlich mitgeführten Staubes günstig zum Boden hin abgeleitet.

Figur 9 zeigt eine weitere Ausführung in Teilseitenschnittansicht, bei der das Lochblech (Gitter, Sieb) aus einem nach oben weisenden und einen nach rückwärts weisenden Bereich besteht und die rückwärtige Behälterwandung im Sinne eines größeren Innenraumes 6 geknickt ausgebildet ist. Auch hier werden die beiden Siebbereiche jeweils von einer Behälterwandung 24 umgriffen, die nach unten hin gegenüber der Falle nach außen hin öffnen.

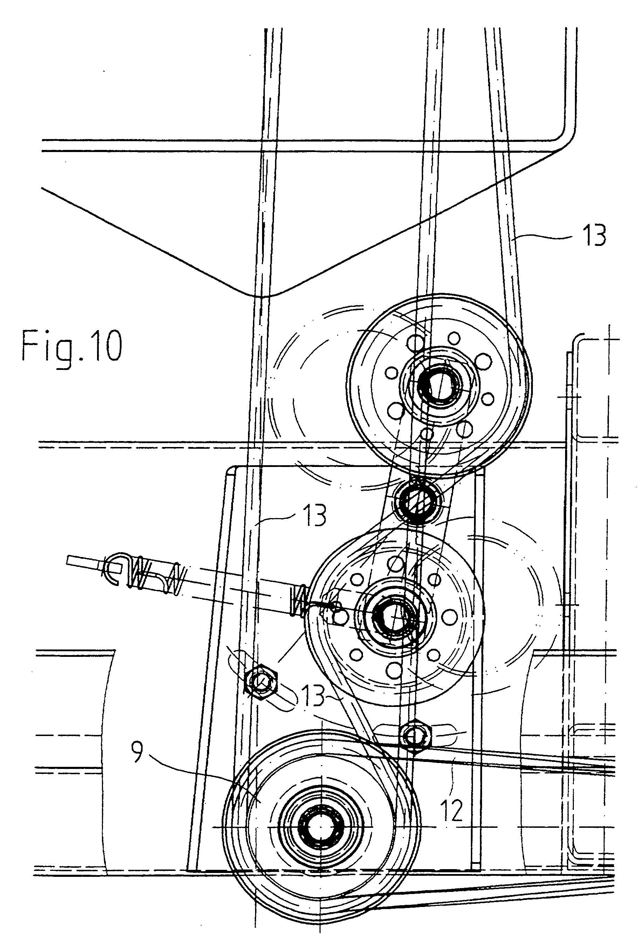

Figur 10 zeigt als Beispiel eine Spannrollenwippe im Bereich zwischen dem Abtriebs-glied 9 und der nicht dargestellten Getrieberiemenscheibe.

### BEZUGSZIFFERNLISTE

- 1: Sammelbehälter
- 2: Trägerfahrzeug
- 3: Wandbereich (eingezogen)
- 4: Gebläse
- 5: vertikale Längsmittelebene
- 6: Behälterinnenraum
- 7: Raum
- 8: getriebliche Übertragungseinrichtung
- 9: Abtriebsglied (Riemenscheibe/Doppel-)
- 10: Gebläserotorwelle
- 11 1: Riemenrad
- 12: Riemen
- 13: Antriebsriemen
- 14: Getrieberiemenscheibe
- 15: Festlegeeinrichtung (Rahmen)
- 16: Rahmenrohr
- 17: Rahmenrohr
- 18: fester Behälterteil
- 19: schwenkbarer Behälterteil/Falle
- 20: Schwenkachse
- 21: Unterkante / von 1)
- 22: oberer Wandbereich
- 23: Sieb
- 24: Behälterwandteilbereich
- 25: Kanal

## Patentansprüche

1. Sammelbehälter (1) in Sattelaufbau am Heck eines Trägerfahrzeuges, der in dem dem Trägerfahrzeug (2) zugewandten unteren Wandbereich (3) ausgehend von der Seite, auf der ein Gebläse (4) angeordnet ist, bis über die vertikale Längsmittelebene (5) des Fahrzeugs (2) hinausreichend, zu dieser unsymmetrisch in Richtung auf das Behälterinnere (6) zurückversetzt ausgebildet ist und dass in dem Raum (7) zwischen diesem zurückversetzten Wandbereich (3) und dem Trägerfahrzeug (2) eine getriebliche Übertragungseinrichtung (8) angeordnet ist, die ein von dem Fahrzeugmotor ausgehend angetriebenes und etwa im Fahrzeuglängsmittelbereich gelegenes Antriebsglied (9) mit der Gebläselaufradachse (10) verbindet,
**dadurch gekennzeichnet,**
**dass** ein an der Gebläserotorachse (10) des Gebläses (4) in vertikaler Ebene umlaufendes Riemenrad (11) über einen um 90° verschränkt geführten Riemen (12) mit einem in horizontaler Ebene umlaufenden Riemenrad als Abtriebsglied (9) geführt ist, das seinerseits über einen weiteren Riementrieb (13, 14) direkt oder indirekt über die Eingangswelle eines Hydraulikgetriebes mit einem auf der vertikal gerichteten Abtriebswelle eines Antriebsmotoraggregates des Trägerfahrzeugs (2) angeordneten Riemenrad verbunden ist.

2. Sammelbehälter nach Anspruch 1,
**dadurch gekennzeichnet,**
**dass** das Gebläse (4) an einer Festlegeeinrichtung (15) gehalten ist, mit der der Sammelbehälter (1) an das Chassis des Trägerfahrzeugs (2) angeschlossen ist.

3. Sammelbehälter nach Anspruch 2,
**dadurch gekennzeichnet,**
**dass** die Festlegeeinrichtung einen Rahmen (15) umfasst, der den fahrzeugseitigen, als Halbschale ausgebildeten Behälterteil (18) trägt, an dem das als Falle ausgebildete andere, schalenförmige Behälterteil (19) im oberen Endbereich um eine horizontale und zur Fahrzeuglängsrichtung senkrecht verlaufende Achse (20) verschwenkbar gelagert ist.

4. Sammelbehälter nach Anspruch 3,
**dadurch gekennzeichnet,**
**dass** der Rahmen (15) den vor dem zurückversetzten Wandbereich (3) des Sammelbehälters (1) liegenden Raum (7) übergreifend von der Unterkante (21) des Sammelbehälters (1) bis zur Schwenkachse (20) im Gebiet des zurückversetzten Wandbereiches (3) geradlinig aufstrebt und dann im oberen Wandbereich (22) des Sammelbehälters (1) diesem folgend ausgeformt ist.

5. Sammelbehälter nach Anspruch 4,
**dadurch gekennzeichnet,**
**dass** der Sammelbehälter (1) aus Kunststoff, insbesondere Glasfaser verstärktem Kunststoff, gefertigt ist.

6. Sammelbehälter nach einem der Ansprüche 3 bis 5,
**dadurch gekennzeichnet,**
**dass** im Bereich des von zwei parallelen Rahmenrohren (16, 17) gebildeten Rahmens (15) ein Hubzylinder ausgebildet ist, der über ein Gelenkgestänge im Bereich der Schwenkachse (20) an die Falle (19) angeschlossen ist.

7. Sammelbehälter nach einem der Ansprüche 3 bis 6,
**dadurch gekennzeichnet,**
**dass** in dem Sammelbehälter, insbesondere im Bereich der Rückwand der Falle (19), der Behälterinnenraum (6) durch ein Sieb (23) begrenzt ist, das in einen Luftabführkanal (25) mündet, der durch einen das Sieb mit Abstand übergreifenden Wandungsteil (24) gebildet ist und nach unten gerichtet ins Freie mündet, insbesondere in einstückiger Ausführung mit der angrenzenden Wandung der Falle (19).

8. Sammelbehälter nach einem der Ansprüche 1 bis 7,
**dadurch gekennzeichnet,**
**dass** die getriebliche Übertragungseinrichtung (8) als Riementrieb (9, 11, 12) ausgebildet ist.

9. Sammelbehälter nach Anspruch 8,
**dadurch gekennzeichnet,**
**dass** in die Übertragungseinrichtung (8) eine Kupplung eingeschaltet ist, insbesondere in Ausbildung als Magnetkupplung, vorzugsweise im Bereich der Antriebswelle bzw. des Riemenrades (11) des Gebläserotors.

## Claims

1. Collecting container (1) constructed in the manner of a saddle on the back of a carrier vehicle, which is arranged in the lower wall portion (3) facing the carrier vehicle (2), starting from the side on which a blower (4) is mounted, extending beyond the vertical central longitudinal plane (5) of the vehicle (2), constructed to be asymmetrically set back from said plane, towards the interior (6) of the container, and in that a geared transmission device (8) is provided in the space (7) between this set-back wall portion (3) and the carrier vehicle (2), which connects a drive member (9) driven by the vehicle motor and located substantially in the central longitudinal region of the vehicle, with the rotor shaft (10) of the blower, **characterised in that** a belt pulley (11) rotating on the rotor shaft (10) of the blower (4) in the vertical plane, over which a belt (12) is guided, is set to 90° with a belt pulley rotating in the horizontal plane as the power takeoff member (9), which is in turn connected directly via another belt drive (13, 14) or indirectly via the input shaft of a hydraulic gear to a belt pulley mounted on the vertically directed power takeoff shaft of a drive motor unit of the carrier vehicle (2).

2. Collecting container (1) according to claim 1, **characterised in that** the blower (4) is held on a fixing device (15) by means of which the collecting container (1) is attached to the chassis of the carrier vehicle (2).

3. Collecting container (1) according to claim 2, **characterised in that** the fixing device comprises a frame (15) which carries the container part (18) closest to the vehicle and constructed as a half-shell, on which the other, dish-shaped container part (19) constructed as a trap is mounted in the upper end region so as to pivotable about a horizontal spindle (20) extending perpendicularly to the longitudinal direction of the vehicle.

4. Collecting container (1) according to claim 3, **characterised in that** the frame (15) runs straight upwards over the space (7) located in front of the set-back wall portion (3) of the collecting container (1), extending from the lower edge (21) of the collecting container (1) to the pivot spindle (20) in the region of the recessed wall portion (3), and is then shaped to conform to the collecting container (1) in the upper wall portion (22) thereof.

5. Collecting container according to claim 4, **characterised in that** the collecting container (1) is made of plastics, particularly fibreglass-reinforced plastics.

6. Collecting container according to one of claims 3 to 5, **characterised in that** in the region of the frame (15) formed by two parallel frame tubes (16, 17), a lifting cylinder is formed which is connected to the trap (19) by means of an articulated linkage in the region of the pivot spindle (20).

7. Collecting container according to one of claims 3 to 6, **characterised in that** in the collecting container, particularly in the region of the rear wall of the trap (19), the interior (6) of the container is bounded by a screen (23) which opens into an air outlet channel (25) formed by a wall portion (24) extending over the screen at a spacing therefrom and opening out into the open air in a downward direction, more particularly constructed to be integral with the adjacent wall of the trap (19).

8. Collecting container according to one of claims 1 to 7, **characterised in that** the geared transmission (8) is constructed as a belt drive (9, 11, 12).

9. Collecting container according to claim 8, **characterised in that** a coupling is incorporated in the transmission (8), particularly in the form of a magnetic coupling, preferably in the region of the drive shaft or belt pulley (11) of the blower rotor.

## Revendications

1. Réservoir collecteur (1) attelé à l'arrière d'un véhicule porteur et qui, dans la zone de paroi (3) située en bas et en regard du véhicule porteur (2), en partant du côté où se trouve un ventilateur (4) pour aller au-delà du plan vertical longitudinal médian (5) du véhicule (2), est décalé asy-métriquement par rapport à ce plan vers l'arrière en direction de l'intérieur (6) du réservoir, l'espace (7) compris entre cette partie de paroi décalée (3) et le véhicule porteur (2) contenant un dispositif de transmission de mouvement (8) reliant l'axe (10) de la roue de ventilateur à un organe d'entraînement (9) entraîné à partir du moteur du véhicule et situé à peu près dans la zone de l'axe longitudinal médian du véhicule.
**Caractérisé en ce qu'**
une poulie de courroie (11), montée sur l'axe (10) du rotor du ventilateur (4) et tournant dans un plan vertical, est reliée par une courroie (12) tournée de 90° sur elle-même à une poulie de courroie tournant dans un plan horizontal et constituant l'organe de sortie (9), qui de son côté est directement par un autre entraînement à courroies (13, 14) ou indirectement par l'intermédiaire de l'arbre d'entrée d'une transmission hydraulique, relié à une poulie de courroie montée sur l'arbre de sortie dirigé verticalement d'un groupe motopropulseur du véhicule porteur (2).

2. Réservoir collecteur selon la revendication 1,
**caractérisé en ce que**
le ventilateur (4) est monté sur un dispositif de fixation (15) par lequel le réservoir collecteur (1) est raccordé au châssis du véhicule porteur (2).

3. Réservoir collecteur selon la revendication 2,
**caractérisé en ce que**
le dispositif de fixation comprend un cadre (15) qui porte la partie de réservoir (18) située du côté du véhicule constituée par une demi-coquille sur laquelle l'autre partie de réservoir (19) en forme de coquille jouant le rôle de trappe, est montée basculante à son extrémité supérieure autour d'un axe horizontal (20) perpendiculaire à la direction longitudinale du véhicule.

4. Réservoir collecteur selon la revendication 3,
**caractérisé en ce que**
le cadre (15) qui passe sur l'espace (7) situé devant la partie de paroi (3) reculée du réservoir collecteur (1) en allant du bord inférieur (21) de ce réservoir jusqu'à l'axe de basculement (20) monté en ligne droite dans la zone de la partie de paroi reculée (3) puis se courbe en suivant la partie supérieure (22) de la paroi du réservoir (1).

5. Réservoir collecteur selon la revendication 4,
**caractérisé en ce que**
le réservoir collecteur (1) est fabriqué en matière plastique, de préférence renforcée par des fibres de verre.

6. Réservoir collecteur selon l'une quelconque des revendications 3 à 5,
**caractérisé en ce que**
dans la zone du cadre (15) constitué par les deux tubes parallèles de cadre (16, 17) est monté un vérin de levage raccordé par une tringlerie à la trappe (19) dans la zone de l'axe de basculement (20).

7. Réservoir collecteur selon l'une quelconque des revendications 3 à 6,
**caractérisé en ce que**
dans le réservoir, en particulier dans la zone de la paroi arrière de la trappe (19) de l'espace interne (6) du réservoir est délimité par un crible (23) débouchant dans un canal de sortie d'air (25) constitué par une partie de paroi (24) couvrant le crible à une certaine distance et débouchant à l'air libre vers le bas, cette partie étant notamment partie intégrante de la paroi de la trappe (19).

8. Réservoir collecteur selon l'une quelconque des revendications 3 à 7,
**caractérisé en ce que**
le dispositif de transmission d'entraînement (8) est un système à courroie (9, 11, 12).

9. Réservoir collecteur selon la revendication 8
**caractérisé en ce que**
dans le dispositif de transmission (8) est intercalé un embrayage notamment sous la forme d'un embrayage magnétique, monté de préférence dans la zone de l'arbre d'entraînement c'est-à-dire de la poulie de courroie (11) du rotor du ventilateur.
